**Europäisches Patentamt**

**European Patent Office**

**Office européen des brevets**

(19)

(11) Veröffentlichungsnummer: **0 128 281**
**B1**

(12)

# EUROPÄISCHE PATENTSCHRIFT

(45) Veröffentlichungstag der Patentschrift:
**10.08.88**

(21) Anmeldenummer: **84103506.6**

(22) Anmeldetag: **30.03.84**

(51) Int. Cl.⁴: **A 61 H 3/00**

(54) **Bremsbarer Wagen für Laufschienen.**

(30) Priorität: **04.06.83 DE 3320281**

(43) Veröffentlichungstag der Anmeldung:
**19.12.84 Patentblatt 84/51**

(45) Bekanntmachung des Hinweises auf die Patenterteilung:
**10.08.88 Patentblatt 88/32**

(84) Benannte Vertragsstaaten:
**AT BE CH DE FR GB IT LI NL SE**

(56) Entgegenhaltungen:
**EP-A-0 090 711**
**FR-A-2 373 997**
**US-A-2 834 435**
**US-A-3 861 318**

(73) Patentinhaber: **Hespe & Woelm GmbH & Co. KG,
Hasselbecker Strasse 4, D-5628 Heiligenhaus (DE)**

(72) Erfinder: **Fabian, Klaus, Herzogstrasse 64, D-5628
Heiligenhaus (DE)**

(74) Vertreter: **Patentanwälte Dipl.- Ing. Alex Stenger
Dipl.- Ing. Wolfram Watzke Dipl.- Ing. Heinz J.
Ring, Kaiser- Friedrich- Ring 70, D-4000 Düsseldorf
11 (DE)**

## Beschreibung

Die Erfindung betrifft einen bremsbaren Wagen für Laufschienen, insbesondere für Laufschienen-Systeme für behinderte Personen, mit einem Tragarm, an dessen unterem Ende ein zu tragender Gegenstand einhängbar ist und an dessen oberem Ende Laufrollen derart angeordnet sind, daß sie auf unteren Flanken der Laufschiene in der Schienenlängsrichtung abrollen können, mit einem mit der Laufschiene in Eingriff bringbaren Bremselement sowie mit mindestens einem Bolzen, der an dem Tragarm mit einer Feder belastet quer zur Bewegungsrichtung der Laufrollen geführt ist, wobei am unteren Ende des Bolzens ein Haken oder eine Öse zum Einhängen einer Last und am oberen Ende des Bolzens das Bremselement angeordnet ist und wobei die Feder in unbelasteten Zustand des Tragarmes das Bremselement in einer vertikalen Extremposition zum bremsenden Eingriff mit einer Fläche der Laufschiene hält.

Wagen für Laufschienen werden nicht nur an hängend montierten Rolltoren oder an Einschienenhängebahnen im Bergbau sondern auch im Klinik-, Rehabilitations- und Wohnbereich für Behinderte - in erster Linie als Gehhilfe - benötigt.

Ein bremsbarer Wagen für Laufschienen der eingangs angegebenen Art ist aus der US-A-2 834 435 bekannt. Dieser bekannte Wagen besitzt einen Tragarm, der auf Laufrollenpaaren längs einer Laufschiene verfahrbar ist. Der Wagen ist mit einer federbelasteten Bremseinrichtung versehen, die im unbelasteten Zustand des Tragarmes im bremsenden Eingriff mit einer Fläche der Laufschiene steht. Zu diesem Zweck weist die Bremseinrichtung einen quer zur Bewegungsrichtung des Tragarmes geführten federbelasteten Bolzen auf, an dessen unterem Ende eine Öse zum Einhängen einer Last und an dessen oberem Ende ein Bremselement angeordnet ist, das aufgrund der Federbelastung im unbelasteten Zustand des Bolzens in einer vertikalen Extremsposition im Eingriff mit der Unterseite der Laufschiene steht.

Dieser bekannte Wagen für Laufschienen ist zwar im unbelasteten Zustand gebremst, so daß er nicht von alleine fortrollen kann, doch besteht die Gefahr, daß er im belasteten Zustand ungewollt fortrollen kann. Dies ist insbesondere dann gefährlich, wenn ein Patient, der sich mittels einer an einem Wagen für eine Laufschiene befestigten Strickleiter z. B. von seinem Rollstuhl in eine Badewanne begeben möchte, beim Umsteigen aufgrund des voll belasteten und daher ungebremsten Wagens fortrollt. Außerdem kann es vorkommen, daß eine an den Wagen sich hängende Person, die beim Stolpern das Gleichgewicht verliert, nicht verhindern kann, daß der Wagen dann eine unkontrollierte Bewegung in Laufschienenrichtung ausführt. Hierdurch kann eine behinderte Person sehr gefährlich stürzen.

Davon ausgehend liegt der Erfindung die Aufgabe zugrunde, den bekannten bremsbaren Wagen für Laufschienen derart weiterzuentwickeln, daß er auch bei einer besonders hohen Belastung ebenfalls automatisch bremsbar ist.

Als technisch Lösung wird mit der Erfindung ein am oberen Ende eines der Bolzen angeordnetes weiteres Bremselement zum reibschlüssigen Anliegen an einer Fläche der Laufschiene im vollbelasteten Zustand des Tragarmes vorgeschlagen.

Ein nach dieser technischen Lehre ausgebildeter bremsbarer Wagen für Laufschienen hat den Vorteil, daß er nicht nur im unbelasteten Zustand gebremst wird, sondern daß er auch bei einer besonders hohen Belastung, wie sie z. B. bei einem Sturz einer sich an dem Wagen festhaltenden behinderten Person oder beim Umsteigen einer solchen Person von einer Sitz- oder Liegeunterlage auf eine andere auftritt, gebremst wird. Eine derartige zusätzliche "Sturzbremse" erhöht somit insgesamt die Sicherheit des Wagens, wobei dieser in einem Zwischenbereich zwischen dem unbelasteten Zustand und vollbelasteten Zustand längs der Laufschiene frei bewegbar ist. Dieser Zwischenbereich kann durch Einstellen der Vorspannung der Feder oder die Auswahl einer besonderen Feder speziell eingestellt werden, so daß sich die Bremse erst von einer bestimmten Mindestspannung an löst und oberhalb einer vorbestimmten Höchstbelastung wieder tätig wird.

Gemäß einer ersten praktischen Ausführungsform der Erfindung ist das Bremselement der Bewegungsbremse ein Bremskeil, der in seiner höchsten Position mit den Rändern des unteren Längsschlitzes einer kastenförmigen Laufschiene in bremsendem Eingriff steht.

Ein konusförmiger Bremskeil, bei dem die Konusachse mit der Bolzenachse zusammenfällt, hat den Vorteil, daß er in jeder relativen Drehposition zu dem Bolzen wirksam bleibt. Eine Rändelung der Außenfläche des Bremskonus' oder eine sonstwie aufgerauhte Außenfläche erhöht die Bremswirkung.

Eine Überlastungs- und/oder Sturzbremse des erfindungsgemäßen Wagens ergibt sich gemäß einer Weiterbildung der Erfindung für diese erste Ausführungsform durch eine an dem Bolzen oberhalb des Bremskeiles befestigte, sich quer zu dem Bolzen erstreckende Bremsscheibe zum reibschlüssigen Anliegen an den unteren Flanken innerhalb der Laufschiene im vollbelasteten Zustand des Tragarmes. Diese Bremsscheibe ist starr oder durch ein Gelenk mit dem Bolzen verbunden, so daß auch bei einer schräg an dem Bolzen angreifenden Überbelastung die volle Bremsfläche der Bremsscheibe wirksam werden kann. Auch diese Bremsfläche ist zwecks Vergrößerung der Bremskraft bevorzugt aufgerauht.

Bei einer zweiten Ausführungsform eines erfindungsgemäßen bremsbaren Wagens mit einer Überlastungs- und/oder Sturzbremse ist vorgesehen, daß

a) an dem Tragarm ein zweiter, mit einer weiteren Feder belasteter Bolzen quer zur Bewegungsrichtung der Laufrollen geführt ist,

b) an den unteren Enden der beiden Bolzen ein Hebel derart angeordnet ist, daß entlang seiner Längsrichtung an ihm in Abständen voneinander die Bolzen sowie der zu tragende Gegenstand angreifen und

c) am oberen Ende des zweiten Bolzens das weitere Bremselement angeordnet ist.

Diese zweite Ausführungsform hat den Vorteil, daß nach dem Lösen der Bewegungsbremse und vor dem Greifen der Überlastungs- und/oder Sturzbremse ein Druckpunkt vorgesehen ist, so daß nach dem Auslösen der Bewegungsbremse, zu dem nur eine sehr geringe, insbesondere vorgebbare, Kraft erforderlich ist, ein vorgebbarer Belastungsbereich liegt, innerhalb dessen ein Auslösen der Überlastungs- und/oder Sturzbremse mit Sicherheit ausgeschlossen ist. Durch diese Funktionstrennung der beiden Bremsarten kann mit einfachen Mitteln jede der beiden Bremsen für seine spezielle Aufgabe optimal ausgelegt werden.

Bei dieser zweiten Ausführungsform ist grundsätzlich die Verwendung der im Zusammenhang mit der ersten Ausführungsform beschriebenen Bremskeile und Bremsscheiben möglich; d. h., daß beide Bremselemente von ihren jeweiligen Federn im selben Richtungssinn beaufschlagt sind. Hierzu muß der Hebel einen in bezug auf den Wagen ortsfesten weiteren Anlenkpunkt an dem einen Hebelende und den Lastanhängpunkt an dem gegenüberliegenden Hebelende aufweisen. Die beiden Anlenkpunkte für die Bolzen liegen dann zwischen den Hebelenden dieses einseitigen Hebels, bei dem die Hebelarmlänge für die Bewegungsbremse größer als die Hebelarmlänge für die Überlastungs- und/oder Sturzbremse ist und die Feder für die Überlastungs- und/oder Sturzbremse bevorzugt erst nach dem Lösen der Bewegungsbremse wirksam wird.

Eine besonders einfache und wirkungsvolle Version dieser zweiten Ausführungsform sieht allerdings vor, daß zumindest die Sturz- und/oder Überlastungsbremse nach oben gegen die Laufschiene wirkt, so daß der Wagen zwischen dem Bremselement der Überlastungs- und/oder Sturzbremse einerseits und den Laufflächen für die Laufrollen andererseits eingespreizt ist. Hierzu ist gemäß einer Weiterbildung der Erfindung bevorzugt vorgesehen, daß die Federn gegensinnig derart auf die zugehörenden Bolzen wirken, daß sich der Drehpunkt des Hebels nach dem Lösen des ersten Bremselementes von der entsprechenden Fläche der Laufschiene von dem unteren Anlenkpunkt des ersten Bolzens zu dem unteren Anlenkpunkt des zweiten Bolzens hin verlagert. Hierbei wird ein genau definierter Druckpunkt dadurch geschaffen, daß der Bewegungsweg des ersten Bolzens durch einen Anschlag begrenzt ist.

Ein besonderer Vorteil dieser zweiten Ausführungsform der Erfindung besteht in einer feinen Einstellbarkeit sowie Nachstellbarkeit der Auslösekräfte für beide Bremsen. Zu diesem Zwecke haben die beiden Federn nicht nur unterschiedliche Federkonstanten, sondern ihre Abstützpunkte an dem Wagen und/oder den Bolzen sind höhenverstellbar. Zudem kann auf einfache Weise die Hebelarmlänge zum Angriffspunkt der Last hin verstellt werden, so daß eine erhebliche Erweiterung des Einstellbereiches für beide Bremsen gegeben ist. Ein derartiger bremsbarer Wagen kann daher z. B. durch ein einfaches Einstellen der Bremsauslösekräfte sowohl von sehr leichten Personen, wie Kinder, als auch von übergewichtigen Personen verwendet werden.

Weitere zweckmäßige Ausgestaltungen des Erfindungsgegenstandes, die insbesondere eine Verbesserung der Bremswirkungen gewährleisten, sind in weiteren Patentansprüchen enthalten.

Die vorgenannten, erfindungsgemäß zu verwendenden Bauteile unterliegen in ihrer Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der zwei bevorzugte Ausführungsformen erfindungsgemäß ausgebildeter bremsbarer Wagen für Laufschienen dargestellt worden sind. In der Zeichnung zeigen:

Fig. 1 einen ersten bremsbaren Wagen in Seitenansicht mit einer z. T. gebrochen dargestellten Laufschiene;

Fig. 2a denselben Wagen im Schnitt entlang der Linie II - II in Fig. 1;

Fig. 2b denselben Wagen im völlig ungebremsten Zustand;

Fig. 2c denselben Bremswagen im belastet gebremsten Zustand;

Fig. 3a bis 3c einen zweiten bremsbaren Wagen in Seitenansicht mit einer z. T. gebrochen dargestellten Laufschiene in drei unterschiedlichen Arbeitspositionen sowie

Fig. 4a bis 4c denselben Wagen im Schnitt entlang der Linien IVa,b,c - IVa,b,c gemäß den Fig. 3a bis 3c.

Ein erster bremsbarer Wagen 1 für eine kastenförmige Laufschiene 2 mit einem unteren Längsschlitz 3 besteht aus zwei Tragplatten 4, 5, an deren unteren Enden ein zu tragender, in der Zeichnung nicht dargestellter Gegenstand in eine dreh- oder schwenkbare Öse 6 einhängbar ist. Beidseitig der Tragplatten 4, 5 sind an den oberen Enden Laufrollen 7 bzw. 8 derart angeordnet, daß sie auf den unteren, einander gegenüberliegenden Flanken 9, 10 innerhalb der kastenförmigen Laufschiene 2 in der Schienenlängsrichtung abrollen können. Hierzu sind die Laufrollen 7 und 8 bevorzugt paarweise auf jeweils einer gemeinsamen, durch die Tragplatte 4 bzw. 5 gesteckte Achse drehbar gelagert. Eine rechtwinklig zu der Laufschiene 2 ausgerichtete Hülse 11 ist an gegenüberliegenden Seiten in einer Mittelebene mit den Tragplatten 4,5 verschweißt und bildet mit diesen gemeinsam den Tragarm; sie nimmt einen Bolzen 12 axial verschiebbar auf. Dieser Bolzen 12 trägt an seinem unteren Ende die Öse 6 sowie an seinem oberen Ende einen konusförmigen Bremskeil 13 sowie eine mit Abstand darüber angeordnete, um ein Gelenk 14 schwenkbare Bremsscheibe 15, die an ihrer Unterseite - ebenso wie die Außenfläche des Bremskeiles 13 - zwecks verbesserter Bremswirkung geriffelt oder aufgerauht ist. Es kann auch ein besonderer Bremsbelag vorgesehen sein.

Eine Schraubenfeder 16 umgibt den Bolzen 12 innerhalb der Hülse 11 und ist einerseits an einem Bund 17 der Hülse 11 und andererseits an der unteren Stirnfläche des Bremskeiles 13 abgestützt. Sie wirkt daher auf den Bremskeil 13 als Druckfeder, so daß im unbelasteten Zustand der Bremskeil 13 so weit nach oben geschoben wird, daß er sich mit den Rändern 18, 19 der Flanken 9, 10 der Laufschiene 2 so fest verkeilt, daß der Wagen 1 nicht weiterrollen kann. Dann ist die Bremsscheibe 15 nach allen Seiten unbelastet innerhalb der Laufschiene 2 angeordnet und der Bremskeil in seiner höchsten Position.

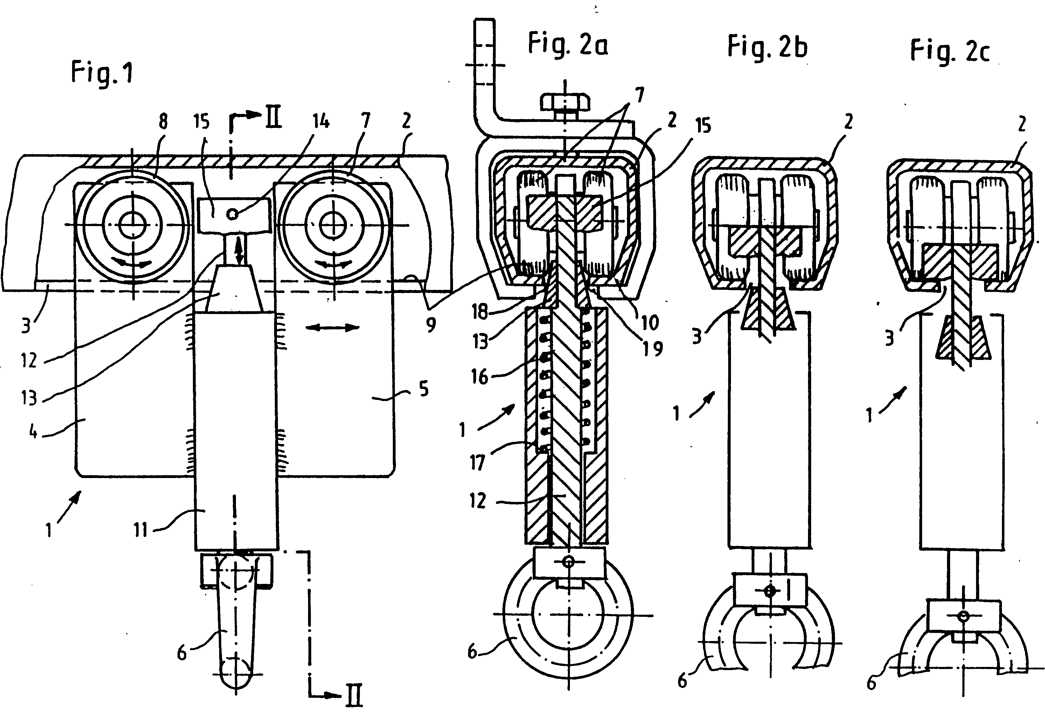

Sobald die Öse 6 stärker als die Federkraft der Feder 16 zugbelastet wird, hebt der Bremskeil 13 von den Rändern 18, 19 des Längsschlitzes 3 der Laufschiene 2 ab und gibt den Wagen 1 zum Abrollen in der Laufschiene 2 frei, weil sich dann die Bremsscheibe 15 immer noch allseitig frei innerhalb der Laufschiene befindet (Fig. 2b). Erst bei einer ruckartigen oder sonstwie noch weitergehenden Zugbelastung der Öse 6 wird die Feder 16 so weit zusammengedrückt, daß die Unterseite der Bremsscheibe 15 mit den Flanken 9, 10 der Laufschiene 2 zur Anlage kommt und den Wagen 1 an einem weiteren Fortrollen hindert (Fig. 2c).

Es versteht sich, daß sowohl die Auslösekraft für den Bremskeil 13, als auch die Maximalkraft zum Wirksamwerden der Bremsscheibe 15 durch entsprechende Wahl der Feder oder einer Verstellung der Federvorspannung einstellbar sind. Für behinderte Personen wäre z. B. eine Auslösekraft für den Bremskeil 13 von etwa 50 N und eine Maximalkraft zum Wirksamwerden der Bremsscheibe 15 von 70 N sinnvoll.

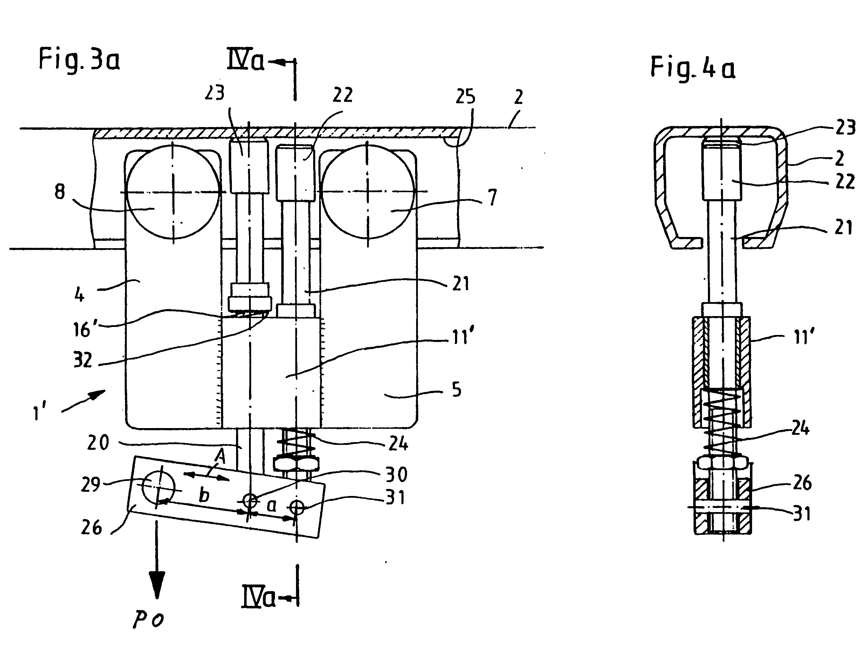

Ein zweiter bremsbarer Wagen 1' besteht gemäß Fig. 3a aus einem Tragarm 4, 5, 11', innerhalb dessen Hülse 11' die Bolzen 20 und 21 quer zu Bewegungsrichtung der Laufrollen 7, 8 geführt sind. In ähnlicher Weise wie im Zusammenhang mit dem ersten Wagen beschrieben, wird der Bolzen 20 im unbelasteten Zustand $P_0$ des Lastangriffpunktes 29 in einer obersten Position gehalten, in der ein Bremselement 23 im bremsenden Eingriff mit der Fläche 25 der Laufschiene 2 steht. Der ebenfalls in der Hülse 11' geführte weitere Bolzen 21 ist im umgekehrten Sinne von einer Feder 24 beaufschlagt, die das zugehörige Bremselement 22 dieses Bolzens 21 von der Fläche 25 der Laufschiene 2 fernhält.

An ihren unteren Enden greifen die Bolzen 20 und 21 an Anlenkpunkten 30 bzw. 31 eines Hebels 26 im Abstand a in Längsrichtung A des Hebels 26 schwenkbar an.

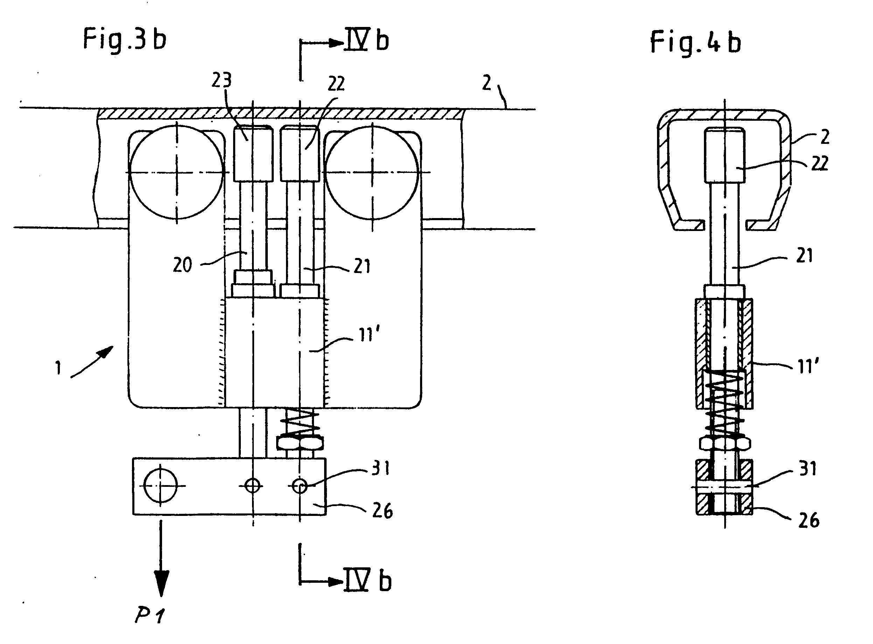

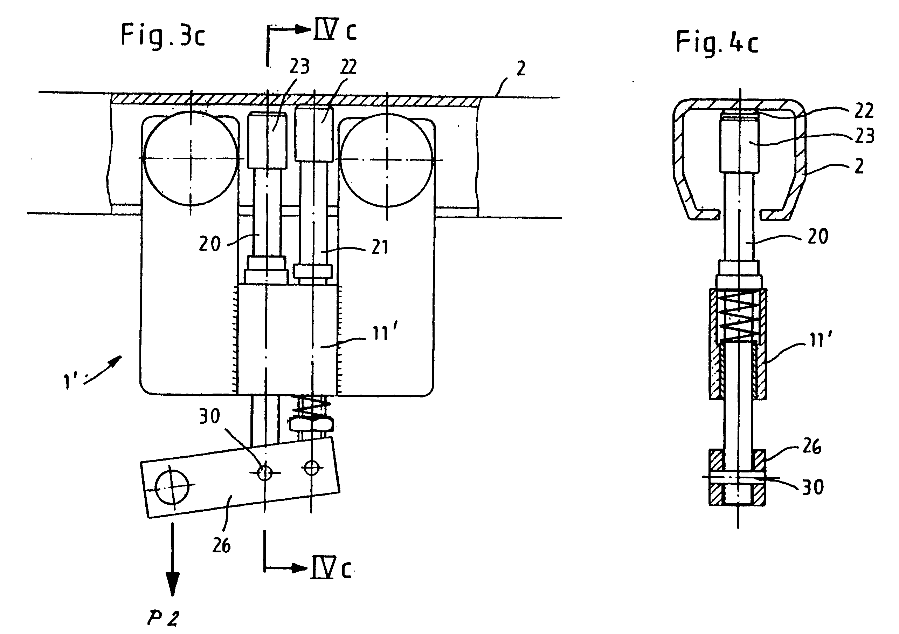

Die Federkonstante der Feder 16' ist erheblich kleiner als die der Feder 24, so daß bei einer relativ geringen Auslösekraft $P_1$ (Fig. 3b) der Drehpunkt des Hebels 26 im Anlenkpunkt 31 des Bolzens 21 liegt. Dadurch wird die Bewegungsbremse (Bezugzeichen 23, 25) ausgelöst. Sobald der Anschlag 32 des Bolzens 20 wirksam wird, verlagert sich der Drehpunkt des Hebels 26 vom Anlenkpunkt 31 zum Anlenkpunkt 30, so daß der Hebel 26 nunmehr ein zweiarmiger Hebel ist, an dessen Lastangriffspunkt 29 im Abstand b von dem Anlenkpunkt 30 eine zwischen $P_1$ und $P_2$ liegende Last angreift. Diese Last wird mit der Hebellänge a über den Anlenkpunkt 31 auf den Bolzen 21 übertragen. Sobald die vorgebbare Last $P_2$ erreicht ist, kommt das Bremselement 22 des Bolzens 21 mit der Fläche 25 der Laufschiene 2 in bremsenden Eingriff (Fig. 3c).

Natürlich ist es auch möglich, die Hebellänge b auf der entgegengesetzten Seite von der Hebellänge a anzuordnen. Dann müssen die Wirkrichtungen der Federn 16' und 24 umgekehrt und die Bremselemente 22 und 23 in ähnlicher Weise wie die Bremsscheibe 15 ausgeführt werden.

## Patentansprüche

1. Bremsbarer Wagen (1,1') für Laufschienen (2) mit einem Tragarm (4, 5, 11, 11'), an dessen unterem Ende ein zu tragender Gegenstand einhängbar ist und an dessen oberem Ende Laufrollen (7, 8) derart angeordnet sind, daß sie auf unteren Flanken (9, 10) der Laufschiene (2) in der Schienenlängsrichtung abrollen können,

mit einem mit der Laufschiene (2) in Eingriff bringbaren Bremselement (13, 22, 23)

sowie mit mindestens einem Bolzen (12, 20), der an dem Tragarm mit einer Feder (16, 16') belastet quer zur Bewegungsrichtung der Laufrollen (7, 8) geführt ist, wobei am unteren Ende des Bolzens (12, 20) ein Haken oder eine Öse (6) zum Einhängen einer Last und am oberen Ende des Bolzens (12, 20) das Bremselement (13, 22, 23) angeordnet ist und wobei die Feder (16, 16') im unbelasteten Zustand des Tragarmes das Bremselement (13, 22, 23) in einer vertikalen Extremposition zum bremsenden Eingriff mit einer Fläche (9, 10; 18, 19; 25) der Laufschiene (2) hält,

gekennzeichnet durch

ein am oberen Ende eines der Bolzen (12, 21) angeordnetes weiteres Bremselement (15, 22) zum reibschlüssigen Anliegen an einer Fläche (9, 10; 25) der Laufschiene (2) im vollbelasteten Zustand des Tragarmes.

2. Wagen nach Anspruch 1, dadurch gekennzeichnet, daß das Bremselement (13) ein Bremskeil ist, der in seiner vertikalen Extremposition mit den Rändern (18, 19) des Längsschlittes (3) einer kastenförmigen Laufschiene (2) in bremsendem Eingriff steht.

3. Wagen nach Anspruch 1 und 2, gekennzeichnet durch eine an dem Bolzen (12) oberhalb des Bremskeiles (13) befestigte, sich quer zu dem Bolzen (12) erstreckende Bremsscheibe (15) zum reibschlüssigen Anliegen an den unteren Flanken (9, 10) innerhalb der Laufschiene (2) im vollbelasteten Zustand des Tragarmes.

4. Wagen nach Anspruch 3, gekennzeichnet durch ein Gelenk (14) zwischen dem Bolzen (12) und der Bremsscheibe (15).

5. Wagen nach einem der Ansprüche 2 bis 4, gekennzeichnet durch eine Konusform des Bremskeiles (13).

6. Wagen nach Anspruch 1, dadurch gekennzeichnet, daß an dem Tragarm (4, 5, 11') ein zweiter, mit einer weiteren Feder (24) belasteter Bolzen (21) quer zur Bewegungsrichtung der Laufrollen (7, 8) geführt ist, daß an den unteren Enden der beiden Bolzen (20 und 21) ein Hebel (26) derart angeordnet ist, daß entlang seiner Längsrichtung (A) an ihm in Abständen (a, b) voneinander die Bolzen (20 und 21) sowie der zu tragende Gegenstand angreifen und daß am oberen Ende des zweiten Bolzens (21) des weitere Bremselement (22) angeordnet ist.

7. Wagen nach Anspruch 6, dadurch gekennzeichnet, daß die Federn (16', 24) gegensinnig derart auf die zugehörenden Bolzen (20, 21) wirken, daß sich der Drehpunkt des Hebels (26) nach dem Lösen des Bremselementes (13, 23) von der entsprechenden Fläche (9, 10; 18, 19; 25) der Laufschiene (2) von dem unteren Anlenkpunkt (31) des Bolzens (21) zu dem unteren Anlenkpunkt (30) des Bolzens (20) hin verlagert.

8. Wagen nach einem der Ansprüche 1 bis 7, gekennzeichnet durch Federn (16, 16', 24) mit unterschiedlicher, vorgebbarer Federkraft.

9. Wagen nach einem der Ansprüche 1 bis 8, gekennzeichnet durch zwei Tragplatten (4, 5) mit Laufrollenpaaren (7, 8) und einer zwischen den Tragplatten angeordneten Hülse (11, 11') zum Aufnehmen des (der) Bolzen(s) (12 bzw. 20 und 21) und der Feder(n) (16 bzw. 16' und 24).

**Claims**

1. A brakable trolley (1, 1') for running rails (2), the trolley comprising:
a support or carrying arm (4, 5, 11, 11') on whose bottom end an article to be carried can be suspended and at whose top and running rollers (7, 8) are so disposed as to be adapted to roll on bottom flanks (9, 10) of the rail (2) lengthwise thereof:
a braking element (13, 22, 23) engageable with the rail (2);
and at least one pin (12, 20) which is guided with spring biasing (16, 16') on the carrying or support arm transversely to the direction of roller movement, the pin (12, 20) having at its bottom end a hook or an eye (6) for the suspension of a load while the braking element (13, 22, 23) is disposed at the top end of the pin (12, 20), the spring (16, 16') being operative, with the carrying or support arm in the unloaded state, to maintain the braking element (13, 22, 23) in a vertical end position for braking engagement with a surface (9, 10; 18, 19; 25) of the rail (2), characterised by a further braking element (15, 22) which is disposed at the top end of one of the pins (12, 21) and which is adapted to engage frictionally with a surface (9, 10; 25) of the rail (2) when the carrying or support arm is in its fully loaded state.

2. A trolley according to claim 1, characterised in that the braking element (13) is a braking wedge which when in its vertical end position is in braking engagement with the edges (18, 19) of the longitudinal slot (3) in a box-section rail (2).

3. A trolley according to claims 1 and 2, characterised by a brake disc (15) which is secured to the pin (12) above the wedge (13), extends transversely of the pin (12) and is adapted for frictional engagement with the bottom flanks (9, 10) inside the rail (2) when the carrying or support arm is in its fully loaded state.

4. A trolley according to claim 3, characterised by an articulation (14) between the pin (12) and the brake disc (15).

5. A trolley according to any of claims 2 - 4, chacterised by a conical shape of the braking wedge (13).

6. A trolley according to claim 1, characterised in that a second pin (21) biased by a further spring (24) is guided on the carrying or support arm (4, 5, 11') transversely to the direction of movement of the rollers (7, 8), a lever (26) is so disposed at the bottom ends of the two pins (20, 21) that the same and the article to be carried engage the lever (26) along its length (A) at intervals (a, b), and the further braking element (22) is disposed at the top end of the second pin (21).

7. A trolley according to claim 6, characterised in that the springs (16', 24) so act in opposite senses on the associated pins (20, 21) that after the braking element (13, 23) has disengaged from the corresponding surface (9, 10; 18, 19; 25) of the rail (22), the fulcrum of the lever (26) shifts from the bottom pivot point (31) of the pin (21) to the bottom pivot point (30) of the pin (20).

8. A trolley according to any of claims 1 - 7, characterised by springs (16, 16', 24) of different and programmable spring force.

9. A trolley according to any of claims 1 - 8, characterised by two carrying or support plates (4, 5) having running roller pairs (7, 8) and, disposed therebetween, a sleeve (11, 11') to receive the or each pin (12 or 20 and 21) and the or each spring (16 or 16' and 24).


**Revendications**

1. Chariot freinant (1, 1') pour rails de roulement (2), comportant une chaise (4, 5, 11, 11') qui présente une extrémité inférieure à laquelle on peut accrocher un objet à porter et une extrémité supérieure sur laquelle des galets (7, 8) sont disposés de manière à pouvoir rouler sur les ailes inférieures (9, 10) du rail de roulement (2), dans la direction longitudinale de ce rail, un élément de freinage (13, 22, 23) pouvant être mis en prise avec le rail de roulement (2), ainsi qu'au moins une tige (12, 20) guidée dans la chaise perpendiculairement à la direction de déplacement des galets (7, 8) en étant chargée par un ressort (16, 16'), un crochet ou une oreille étant disposés à l'extrémité inférieure de la tige (12, 20) pour accrocher une charge et l'élément de freinage (13, 22, 23) étant disposé à l'extrémité supérieure de la tige (12, 20), le ressort (16, 16') maintenant, lorsque la chaise est à l'état non chargé, l'élément de freinage (13, 22, 23) dans une position verticale extrême en prise de freinage avec une surface (9, 10; 18, 19; 25) du rail de roulement (2), caractérisé par un autre élément de freinage (15, 22) disposé à l'extrémité supérieure de l'une des tiges (12, 21) et destiné à être appliqué en liaison de frottement sur une surface (9, 10; 25) du rail de roulement (2) lorsque la chaise est à l'état complètement chargé.

2. Chariot selon la revendication 1, caractérisé en ce que l'élément de freinage (13) est un coin de freinage qui, dans sa position verticale extrême, est en prise de freinage avec les bords (18, 19) de la fente longitudinale (3) d'un rail de roulement (2) en forme de caisson.

3. Chariot selon les revendications 1 et 2, caractérisé par un plateau de freinage (15) fixé sur la tige (12) au-dessus du coin de freinage (13) et s'étendant perpendiculairement à la tige (12), ce plateau étant destiné à être appliqué en liaison de frottement sur les ailes inférieures (9, 10) du rail de roulement (2), à l'intérieur de ce rail, quand la chaise est à l'état complètement chargé.

4. Chariot selon la revendication 3, caractérisé par une articulation (14) disposée entre la tige (12) et le plateau de freinage (15).

5. Chariot selon l'une des revendications 2 à 4, caractérisé par la forme conique du coin de freinage (13).

6. Chariot selon la revendication 1, caractérisé en ce qu'une deuxième tige (21) chargée par un autre ressort (24) est guidée dans la chaise (4, 5, 11') perpendiculairement à la direction de déplacement des galets (7, 8), en ce qu'un levier (26) est disposé aux extrémités inférieures des deux tiges (20 et 21) de manière qu'agissent sur lui les tiges (20, 21) ainsi que l'objet à porter à des intervalles respectifs (a, b) suivant sa direction longitudinale, et en ce que l'autre élément de freinage (22) est disposé à l'extrémité supérieure de la deuxième tige (21).

7. Chariot selon la revendication 6, caractérisé en ce que les ressorts (16', 24) agissent en sens inverse sur les tiges correspondantes (20, 21) de manière que le centre de rotation du levier (26) se déplace, après le dégagement de l'élément de freinage (13, 23) vis-à-vis de la surface correspondante (9, 10; 18, 19; 25) du rail de roulement (2), du centre d'articulation inférieur (31) de la tige (21) au centre d'articulation inférieur (30) de la tige (20).

8. Chariot selon l'une des revendications 1 à 7, caractérisé par des ressorts (16, 16', 24) ayant une force élastique différente pouvant être prédéterminée.

9. Chariot selon l'une des revendications 1 à 8, caractérisé par deux plaques porteuses (4, 5) munies de couples de galets (7, 8) et d'un fourreau (11, 11') disposé entre les plaques porteuses pour recevoir la (les) tige(s) (12; 20 et 21) et le (les) ressort(s) (16; 16' et 24).

Fig. 2c

Fig.2b

Fig.2a

Fig.1

Fig. 3a

Fig. 4a

0 128 281

Fig.4b

Fig.3b

Fig. 3c

Fig. 4c

0 128 281